# EUROPÄISCHE PATENTSCHRIFT

(11) **EP 1 957 029 B1**
(45) Veröffentlichungstag und Bekanntmachung des Hinweises auf die Patenterteilung: **27.07.2011**
(21) Anmeldenummer: 06807644.7
(22) Anmeldetag: 30.10.2006
(51) Int. Cl.: A61J 3/07

(54) **WIEGEVORRICHTUNG EINER VERPACKUNGSMASCHINE**
WEIGHING DEVICE OF A PACKAGING MACHINE
DISPOSITIF DE PESAGE POUR MACHINE DE CONDITIONNEMENT

(30) Priorität: 30.11.2005 DE 102005057393
(43) Veröffentlichungstag der Anmeldung: 20.08.2008
(73) Patentinhaber: ROBERT BOSCH GMBH, 70442 Stuttgart (DE)
(72) Erfinder: RUNFT, Werner, 71364 Winnenden (DE); FRANCK, Thomas, 73547 Lorch-Weitmars (DE); GRASS, Torsten, 73660 Urbach (DE)
(86) Internationale Anmeldenummer: PCT/EP2006/067914
(87) Internationale Veröffentlichungsnummer: WO 2007/062947

(56) Entgegenhaltungen:
- EP-A- 1 582 193
- GB-A- 2 269 354
- US-A- 5 038 839

## Beschreibung

### Stand der Technik

Die Erfindung geht aus von einer Wiegevorrichtung einer Verpackungsmaschine gemäß den Merkmalen des unabhängigen Anspruchs.

Aus der DE 100 01 068 C1 ist bereits eine Vorrichtung zum Dosieren und Abgeben von Pulver in Hartgelatinekapseln oder dergleichen bekannt. Stopfstempel pressen beim Eintauchen in Bohrungen das zu verpackende Pulver zu Presslingen. Um eine. Aussage über die Masse der Presslinge treffen zu können, sind Mittel vorgesehen, die den Federweg der dem Ausstoßstempel unmittelbar vorgeschalteten Stopfstempel erfassen.

Bei den derzeit gängigen Kapselfüllmaschinen werden meistens die Kapseln nach dem Füllen verwogen. D.h. die Überprüfung der korrekten Füllmenge findet dadurch statt, dass das Gewicht von Kapsel und Füllung (Bruttogewicht) ermittelt wird. Es gibt hierzu mehrere Verfahren, z.B. Verwiegung durch eine Waage, Gewichtsermittlung über andere physikalische Effekte usw. im statistischen Verfahren oder zu 100%. Bedingt durch hohe Gewichtsvarianz der Leerkapseln ist dieses Verfahren ungenau. Es sind auch Verfahren bekannt bei denen über eine Brutto - Tara Erfassung das Nettogewicht ermittelt wird. Bei diesen Verfahren finden kapazitive physikalische Effekte Anwendung, was systembedingt erhebliche Ungenauigkeiten in sich birgt.

Aus der EP-A-1582193 ist bereits eine Kapselfüllmaschine bekannt. Zum Kapseltransport sind Übergaberäder vorgesehen. Weiterhin sind zwei Messstationen vorgesehen zur Wiegung der Leerkapsel und der gefüllten Kapsel.

Es ist Aufgabe der vorliegenden Erfindung, die geschilderten Nachteile zu beseitigen oder zumindest zu lindern. Diese Aufgabe wird gelöst durch die Merkmale des unabhängigen Anspruchs.

### Offenbarung der Erfindung

Durch die Vorrichtung nach den Merkmalen des unabhängigen Anspruchs erhöht sich die Genauigkeit der Gewichtsermittlung, da auf ungenaue kapazitive Verfahren zur Nettogewichtsermittlung verzichtet werden kann. Weiterhin können die Kapseln sicher und schnell beispielsweise zur Gewichtsermittlung entnommen werden, da auf die Kapselunterseite zumindest ein Transportstift wirkt, der zur Unterstützung bei der Entnahme zumindest einer Kapsel dient.

Weiter zweckmäßige Weiterbildungen ergeben sich aus weiteren anhängigen Ansprüchen und aus der Beschreibung.

### Zeichnung

Ein Ausführungsbeispiel der Erfindung ist in der Zeichnung dargestellt und wird nachfolgend näher erläutert. Es zeigen:

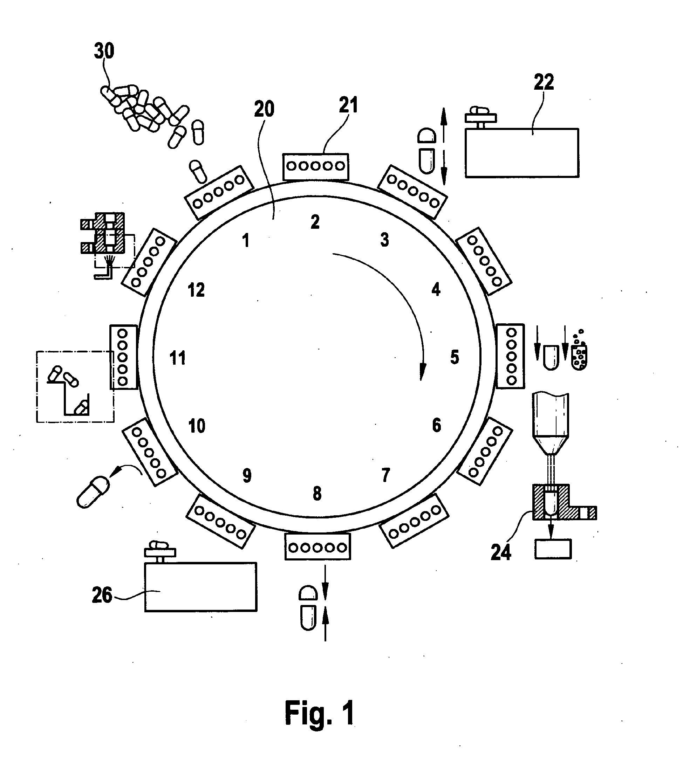

- Die Figur 1: die Stationsanordnung mit Übergabe- und Wiegevorrichtungen einer Verpackungsmaschine,

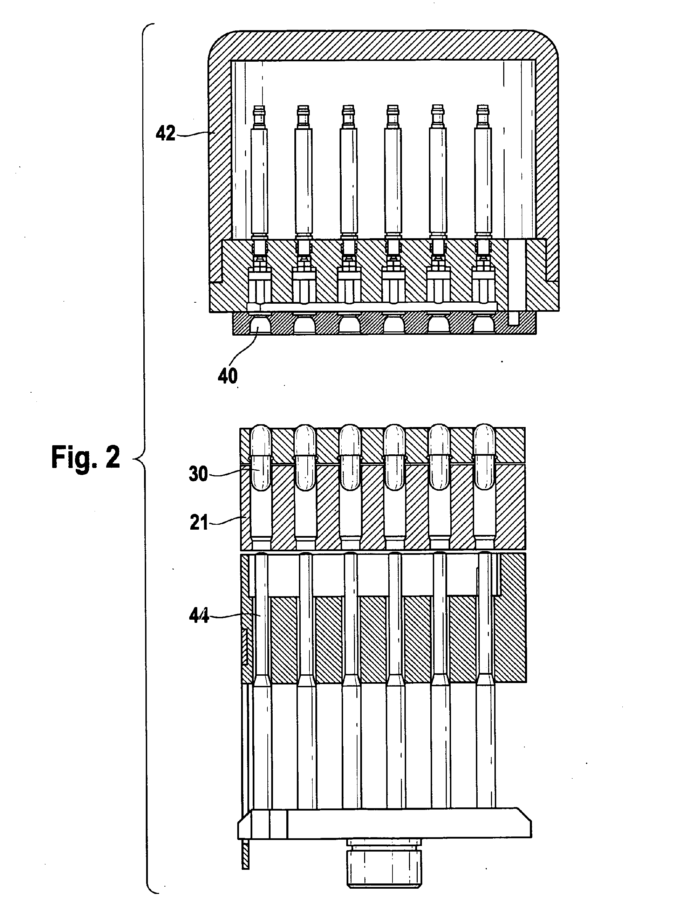

- die Figur 2: eine Übergabevorrichtung mit Kapselhalter an der Station 3 in der Seitenansicht,
- die Figur 3: die Übergabevorrichtung mit Kapselhalter bei abgesenkter Über- gabevorrichtung,
- die Figur 4: die Übergabevorrichtung mit Kapselhalter beim Kapseltransport nach oben,
- die Figur 5: die Übergabevorrichtung mit Kapselhalter beim Kapseltransport nach oben in Unterstützung mit den Transportstiften,
- die Figur 6: das Schwenken der Übergabevorrichtung mit angesaugten Kap- seln,
- die Figur 7: Übergabevorrichtung, Kapselhalter und Wiegeeinrichtung in der Draufsicht,

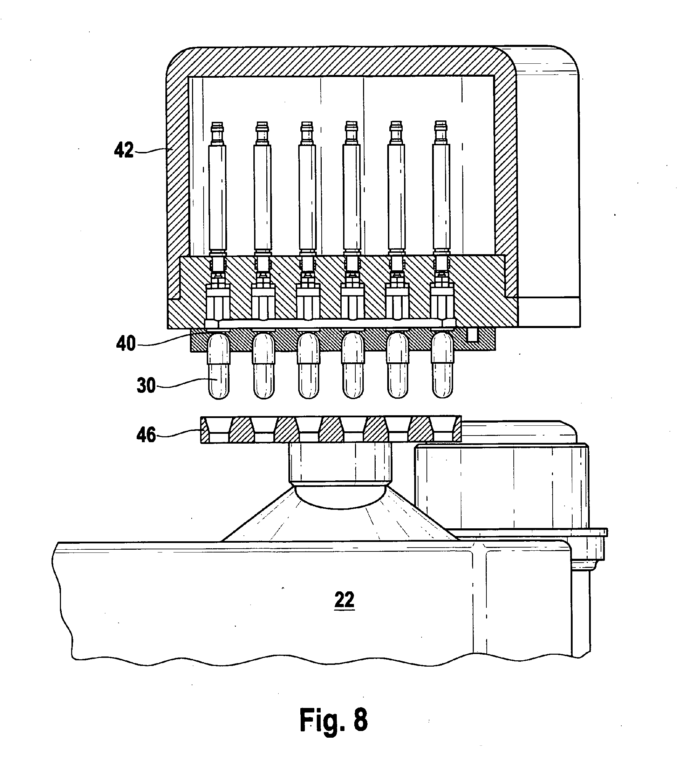

- die Figur 8: die Übergabevorrichtung in Verbindung mit der Wiegeeinrichtung in der Seitenansicht,
- die Figur 9: die Übergabevorrichtung beim Absenken der Kapseln zum Wä- geteller der Wiegeeinrichtung,
- die Figur 10: das Ablegen der ersten Kapsel auf den Wägeteller,
- die Figur 11: das Hochfahren der Hebevorrichtung mit den restlichen Kapseln,
- die Figur 12: das Ablegen der zweiten Kapsel,
- die Figur 13: das Hochfahren der restlichen Kapseln und Verwiegen der verbleibenden zwei Kapseln sowie
- die Figur 14: das Verwiegen aller Kapseln.

Eine Maschine zum Füllen und Verschließen von aus einem Kapselunterteil und einer aufgesteckten Kappe bestehenden Kapsel 30 hat ein zwölfteiliges, schrittweise um eine vertikale Achse gedrehtes Förderrad 20, an dessen Stationen 1 bis 12 an der Umlaufstrecke die einzelnen Behandlungseinrichtungen angeordnet sind. Bei 1 werden die zu füllenden, leeren Kapseln 30 ungeordnet aufgegeben sowie ausgerichtet und geordnet einem Kapselhalter 21 eines Förderrad 20 zugeführt. Daraufhin werden die noch verschlossenen Kapseln aus dem Kapselhalter 21 entnommen und von einer Wiegeeinrichtung 22 gewogen, anschließend in einen leeren Kapselhalter 21 wieder zurückgelegt und Kappen von den Kapselunterteilen getrennt. Bei 5 wird Füllgut wie beispielsweise Pulver für Arzneimittel in die Kapselunterteile eingefüllt. Bei 6 überprüft ein Gewichtskontrollsystem 16 das in die Kapselunterteile gebrachte Füllgut. Auf Station 8 werden die Kapseln 30 wieder verschlossen. Bei 9 werden die gefüllten Kapseln auf einer weiteren Wiegeeinrichtung 26 brutto gewogen. Bei 10 werden die Kapseln 30 verschlossen und an der nachfolgenden Station 11 ausgeworfen.

Die Erfindung beschreibt, wie noch verschlossene Leerkapseln 30 aus dem Kapselhalter 21 entnommen werden, auf einer gravimetrischen Waage 22 verwogen werden und anschließend in einen leeren Kapselhalter 21 wieder zurückgelegt und getrennt werden. Mit dieser Einrichtung ist es möglich, Leerkapseln 30 bei voller Maschinengeschwindigkeit zu entnehmen und wieder einzusetzen ohne nennenswerten Leistungsverlust. Eine Taraverwiegung der Kapsel 30 mit gravimetrischem Messverfahren wird möglich. Wenn man jetzt die weitere Wiegeeinrichtung 26 für gefüllte Kapseln 30 in den Kapseltransport integriert, ist es möglich, aus dem Leergewicht und dem Gewicht der vollen Kapsel 30 das Nettogewicht zu ermitteln. Eine solche Kombination aus gravimetrischer Tarawaage und Bruttowaage zur statistischen Ermittlung der Nettoeinwaage eignet sich insbesondere für eine intermittierende Kapselfülleinrichtung. Ferner kann mit einem solchen System auch ein 100% Gewichtskontrollsystem 24 auf anderer physikalischer Basis kalibriert werden. (z. B. X-ray).

Bei der getaktet arbeitenden Kapselfüllmaschine kommt der mit Kapseln 30 gefüllte Kapselhalter 21 zur Entnahme der Kapseln 30 zum Wiegen an Station 3 an. Der Kapselhalter 21 besteht aus Öffnungen, auf die die zu transportierenden Kapseln 30 aufgesetzt sind. Unterhalb dieser Öffnungen sind jeweils Transportstifte 44 angeordnet, die sich vertikal in Richtung der Unterseite der Kapseln 30 bewegen lassen. In der Station 3 werden nun Kapselhalter 21 und Übergabevorrichtung 42 so angeordnet, dass die Vakuumbohrungen 40 der Übergabevorrichtung 42 die Kapseloberteile überdecken.

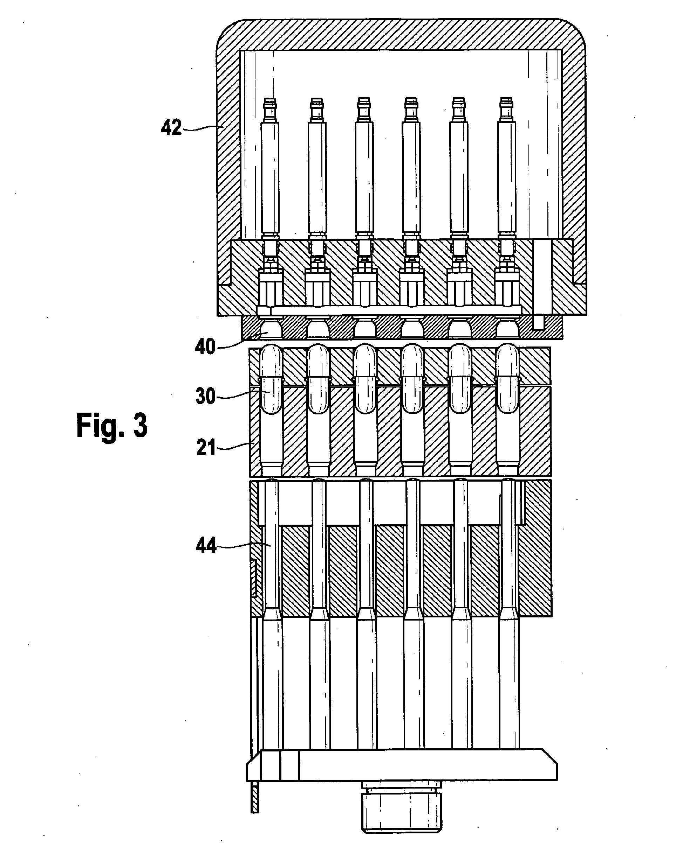

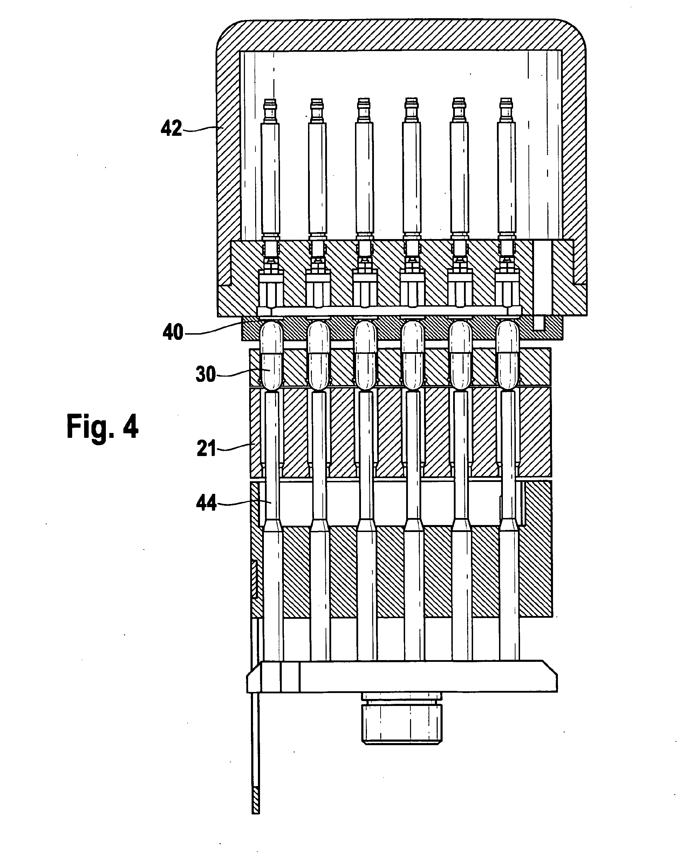

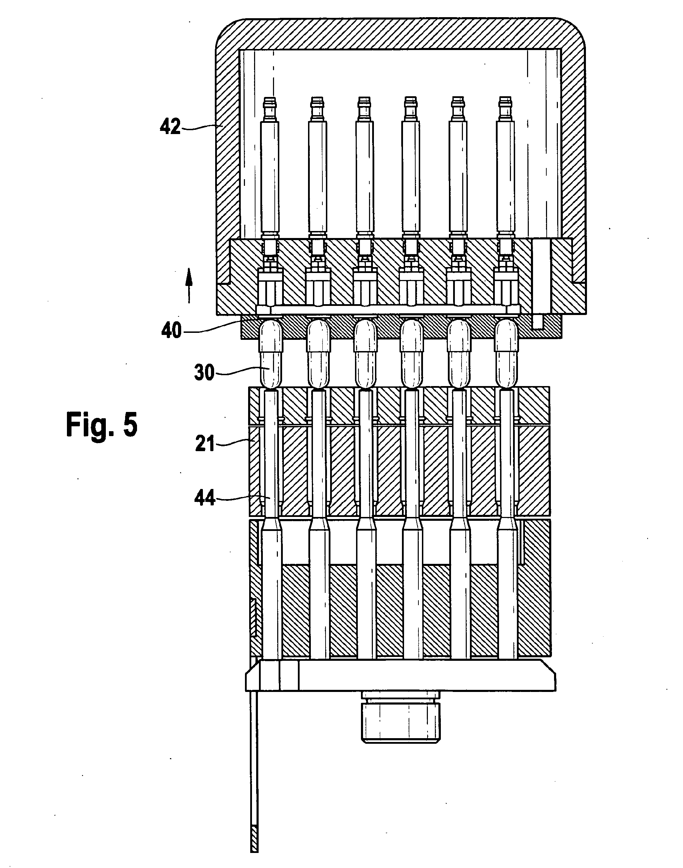

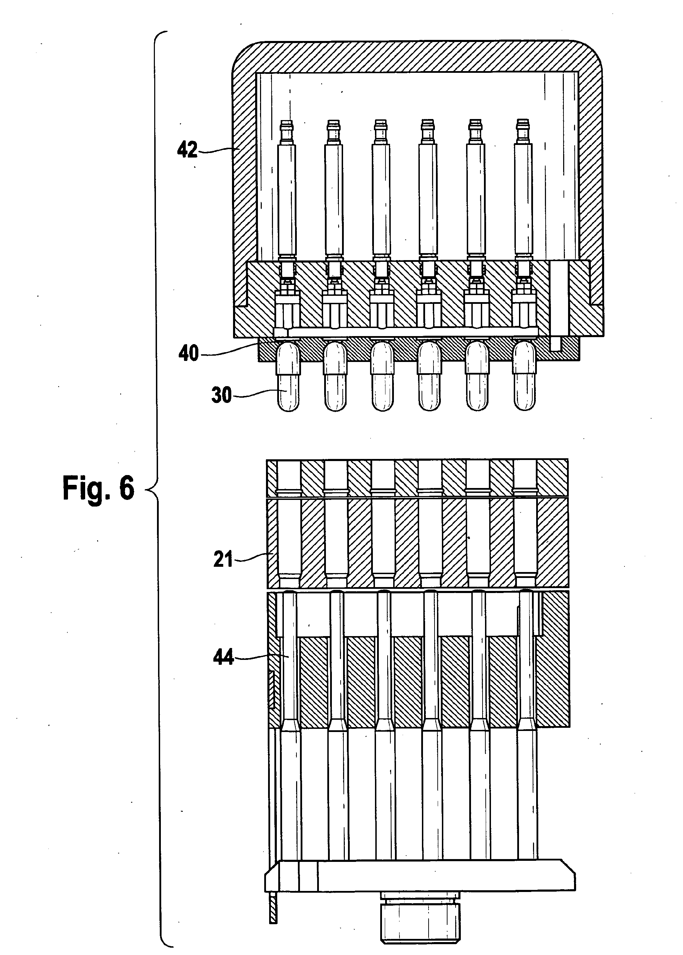

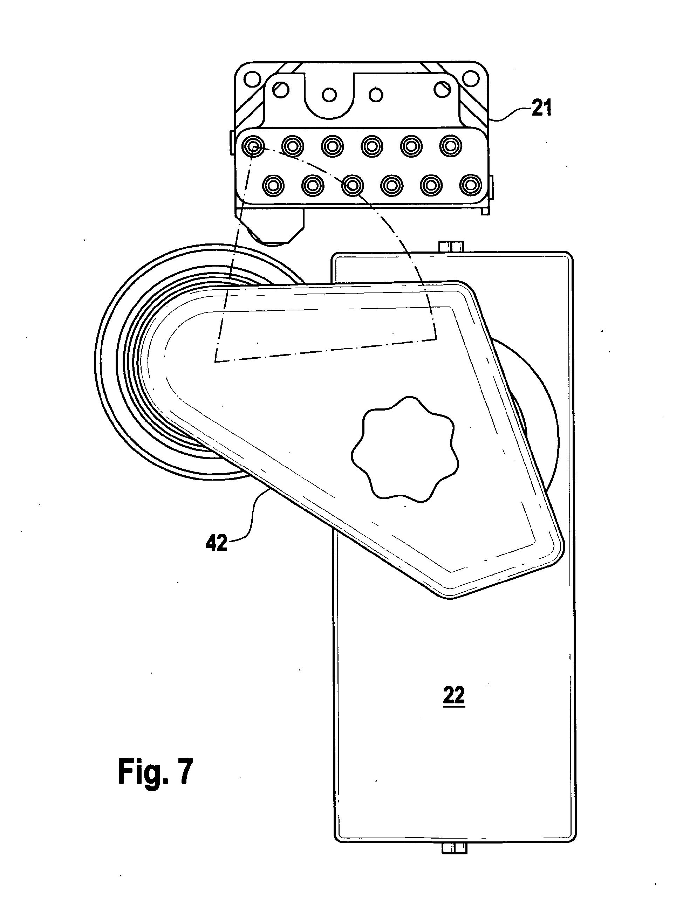

Wie in Figur 3 gezeigt wird die Übergabevorrichtung 42 nach unten in Richtung zu dem Kapselhalter 21 abgesenkt. Gemäß Figur 4 werden die Transportstifte 44 nach oben verfahren, um durch Halten der Kapseln 30 deren Auseinanderfallen zu verhindern. Zudem wird an den Vakuumbohrungen 40 ein Vakuum angelegt, um die Kapseln 30 anzusaugen und aus den Öffnungen des Kapselhalters 21 zu heben (Figur 5) und nach weiterem Anheben zu der Wiegeeinrichtung 22 zu schwenken (Figur 6). Die beschriebene Anordnung ist in Figur 7 in der Draufsicht gezeigt.

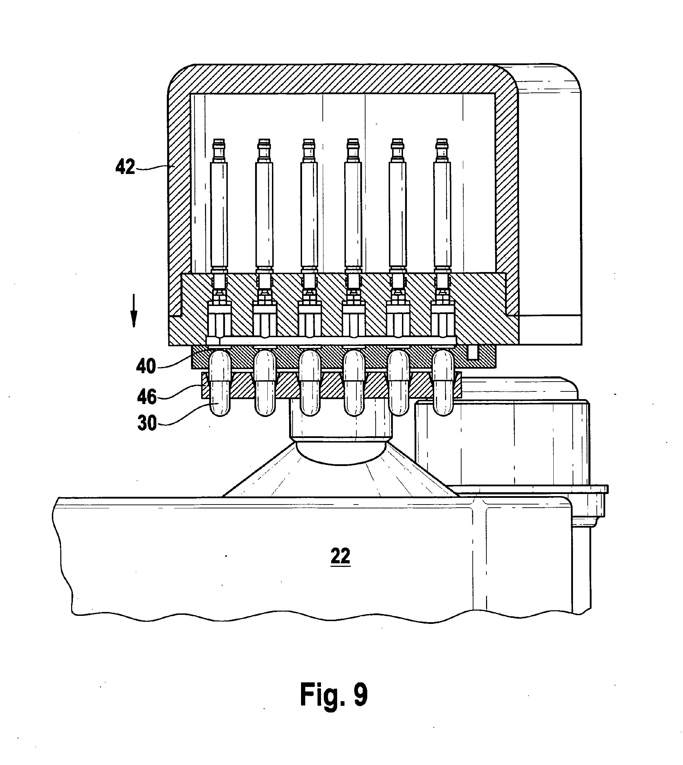

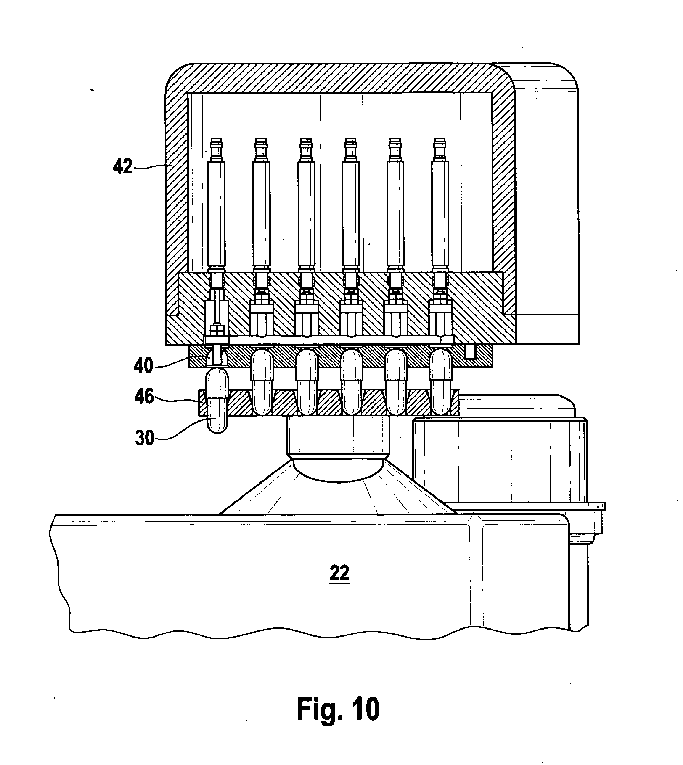

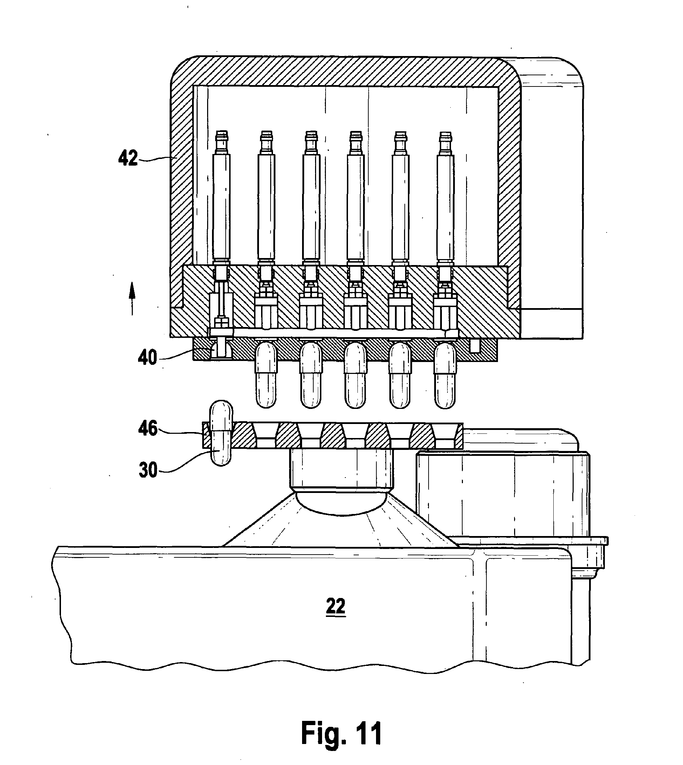

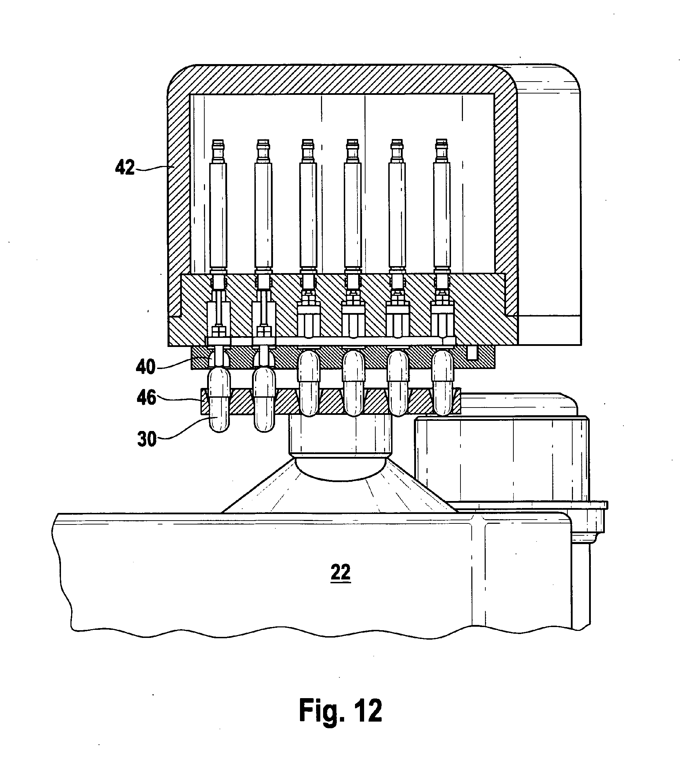

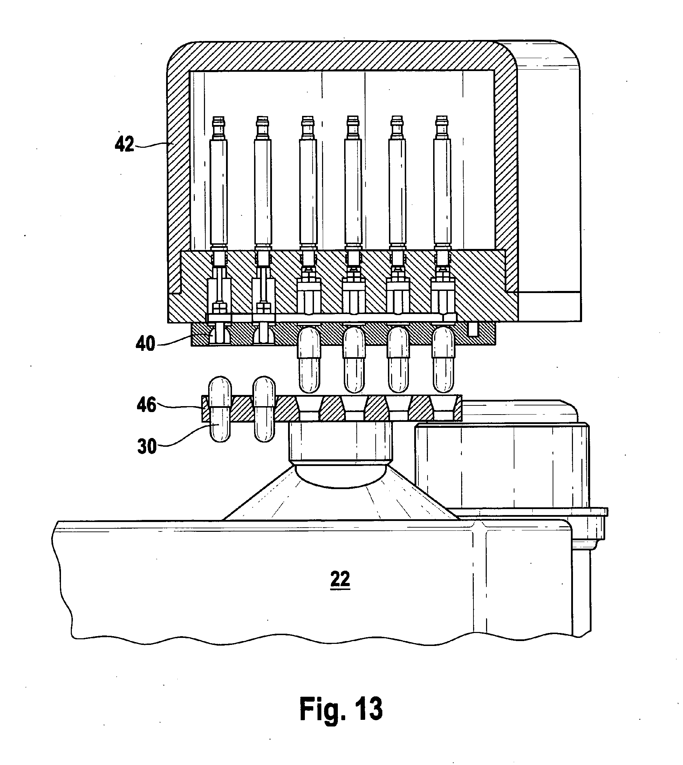

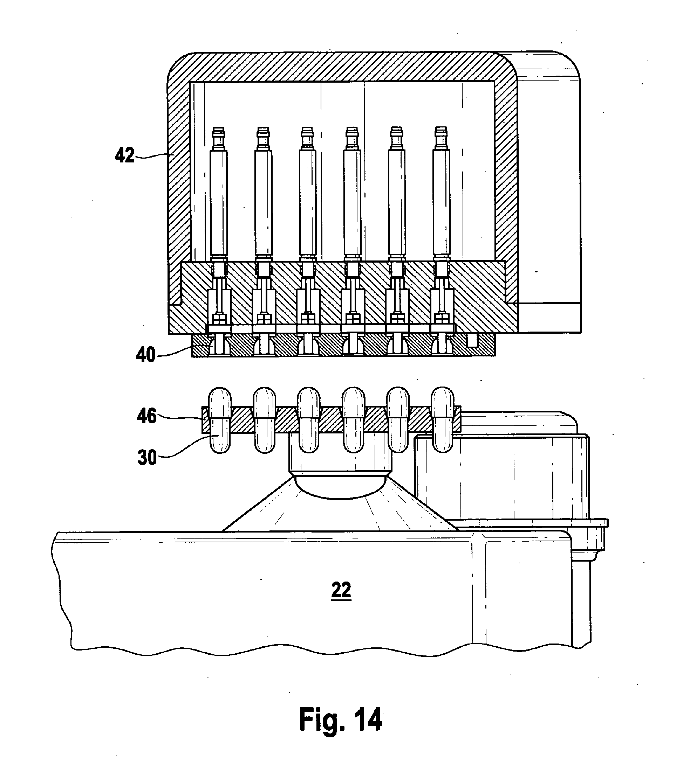

Die Übergabevorrichtung bringt die Kapseln 30 in Überdeckung mit einem Wägeteller 46 der Wiegevorrichtung 22. Die Übergabevorrichtung 42 senkt alle Kapseln 30 in die entsprechenden Öffnungen des Wägetellers 46 ab (Figur 9). Gemäß Figur 10 wird die erste Kapsel 30 in der entsprechenden Aufnahme des Wägetellers 46 abgelegt und zu diesem Zweck das Vakuum in der ersten Vakuumbohrung aufgehoben, während es in den anderen Vakuumbohrungen 40 noch weiterhin besteht. Nach dem Hochfahren der Übergabevorrichtung 42 wird das Taragewicht der ersten abgelegten Kapsel 30 bestimmt mit Hilfe der Wiegeeinrichtung 22 (Figur 11). Im nachfolgenden Schritt wird die nächste Kapsel 30 in den Wägeteller 46 abgelegt und hierzu das Vakuum in der zweiten Vakuumbohrung aufgehoben (Figur 12). Anschließend werden die weiteren verbleibenden (vier) Kapseln 30 durch die Übergabevorrichtung 42 weg von dem Wägeteller 46 nach oben hin bewegt, um den Wiegevorgang der beiden in dem Wägeteller 46 verbleibenden Kapseln 30 zu ermöglichen (Figur 13). Das Leergewicht der zweiten Kapsel 30 ermittelt eine Auswerteeinheit durch Subtraktion des ermittelten Gesamtgewichts der beiden leeren Kapseln 30 und des Leergewichts der ersten Kapsel 30 wie in Figur 11 bestimmt. Dieses Vorgehen wiederholt sich jeweils für die nächste zu verwiegende Kapsel 30, bis alle Kapseln 30 im Wägeteller 46 abgelegt sind, wie in Figur 14 gezeigt.

Das Ablegen der Kapseln in den Kapselhalter 21 läuft analog zum Entnahmevorgang ab. Darüber hinaus kann vorgesehen sein, beim Ablegen der Kapseln 30 in Kapselhalter 21 an den die Kapselunterteile aufnehmenden Öffnungen ein Vakuum anzulegen. Dies dient einer verbesserten Fixierung beim Ablegen der Kapseln 30, wenn die Übergabevorrichtung 42 weg von den abgelegten Kapseln 30 nach oben verfährt. Das Vakuum an den Kapselunterteilen kann auch zum Öffnen der Kapseln 30 verwendet werden, wenn parallel beim Verfahren der Übergabevorrichtung 42 nach oben das Vakuum bei den Vakuumbohrungen 40 ansteht. Dies führt zum Öffnen der Kapseln 30.

Das in Verbindung mit Station 3 beschriebene Übergabeverfahren kommt auch bei Station 9 zum Einsatz. Die weitere Wiegeeinrichtung ermittelt das Bruttogewicht der gefüllten Kapsel 30. Anhand des in Station 3 bestimmten Leergewichts der Kapseln kann das Nettogewicht des verfüllten Guts für jede Kapsel 30 bestimmt werden.

## Patentansprüche

1. Wiegevorrichtung umfassend eine vorzugsweise intermittierend arbeitende Kapselfüllmaschine zur Abfüllung eines zu dosierenden Guts in zumindest eine Kapsel (30), eine erste Wiegeeinrichtung (22), die das Gewicht des in der Kapsel (30) befindlichen Guts zusammen mit der Kapsel (30) erfasst, wobei eine zweite Wiegevorrichtung (26) vorgesehen ist, die das Leergewicht der Kapsel (30) erfasst, **dadurch gekennzeichnet, dass** die Vorrichtung weiter zumindest einen Transportstift (44) umfasst, der zur Unterstützung bei der Entnahme zumindest einer Kapsel (30) dient.

2. Vorrichtung nach Anspruch 1, **dadurch gekennzeichnet, dass** zumindest eine Übergabevorrichtung (42) vorgesehen ist, um zumindest eine Kapsel (30) der ersten und/oder zweiten Wiegeeinrichtung (22, 26) zuzuführen.

3. Vorrichtung nach einem der vorhergehenden Ansprüche, **dadurch gekennzeichnet, dass** ein Kapselhalter (21) vorgesehen ist zum Transport der Kapseln (30).

4. Vorrichtung nach einem der vorhergehenden Ansprüche, **dadurch gekennzeichnet, dass** der Transportstift (44) zumindest in Kapselentnahme- oder ablagerichtung verfahrbar ist

5. Vorrichtung nach einem der vorhergehenden Ansprüche, **dadurch gekennzeichnet, dass** die Übergabevorrichtung (42) Mittel (40) zum Anlegen eines Vakuums an zumindest eine Kapsel (30) umfasst

## Claims

1. Weighing arrangement comprising a preferably intermittently operating capsule-filling machine for filling a meterable substance into at least one capsule (30), and also comprising a first weighing means (22), by means of which the weight of the substance located in the capsule (30) is detected together with the capsule (30), wherein a second weighing means (26) is provided, this detecting the empty weight of the capsule (30), **characterized in that** the arrangement also comprises at least one transporting pin (44), which serves for assisting in the removal of at least one capsule (30).

2. Arrangement according to Claim 1, **characterized by** the provision of at least one transfer arrangement (42), in order to feed at least one capsule (30) to the first and/or second weighing means (22, 26).

3. Arrangement according to one of the preceding claims, **characterized by** the provision of a capsule holder (21) for transporting the capsules (30).

4. Arrangement according to one of the preceding claims, **characterized in that** the transporting pin (44) can be displaced at least in the capsule-removal or -depositing direction.

5. Arrangement according to one of the preceding claims, **characterized in that** the transfer arrangement (42) comprises means (40) for applying a vacuum to at least one capsule (30).

## Revendications

1. Dispositif de pesage comprenant une machine de remplissage de capsules fonctionnant de préférence de manière intermittente, pour remplir au moins une capsule (30) d'un produit à doser, un premier système de pesage (22) qui détecte le poids du produit se trouvant dans la capsule (30) ainsi que le poids de la capsule (30), un deuxième dispositif de pesage (26) étant prévu, lequel détecte le poids à vide de la capsule (30), **caractérisé en ce que** le dispositif comprend en outre au moins une goupille de transport (44) qui sert de support lors du prélèvement d'au moins une capsule (30).

2. Dispositif selon la revendication 1, **caractérisé en ce qu'**au moins un dispositif de transfert (42) est prévu, afin d'amener au moins une capsule (30) au premier et/ou au deuxième système de pesage (22, 26).

3. Dispositif selon l'une quelconque des revendications précédentes, **caractérisé en ce qu'**un dispositif de retenue de capsule (21) est prévu pour transporter les capsules (30).

4. Dispositif selon l'une quelconque des revendications précédentes, **caractérisé en ce que** la goupille de transport (44) peut être déplacée au moins dans la direction de prélèvement ou de dépose des capsules.

5. Dispositif selon l'une quelconque des revendications précédentes, **caractérisé en ce que** le dispositif de transfert (42) comprend des moyens (40) pour appliquer un vide à au moins une capsule (30).
